# EUROPÄISCHE PATENTSCHRIFT

(11) **EP 0 933 996 B1**
(45) Veröffentlichungstag und Bekanntmachung des Hinweises auf die Patenterteilung: **16.08.2001**
(21) Anmeldenummer: 97910424.7
(22) Anmeldetag: 08.10.1997
(51) Int. Cl.: A01N 37/50

(54) **VERFAHREN ZUR BEKÄMPFUNG VON SCHADPILZEN IN KULTURPFLANZEN**
METHOD FOR CONTROLLING PARASITIC FUNGI IN CULTIVATED PLANTS
PROCEDE DE LUTTE CONTRE DES CHAMPIGNONS PARASITES DE PLANTES CULTIVEES

(30) Priorität: 17.10.1996 DE 19642880
(43) Veröffentlichungstag der Anmeldung: 11.08.1999
(73) Patentinhaber: BASF AKTIENGESELLSCHAFT, 67056 Ludwigshafen (DE)
(72) Erfinder: SCHMIDT, Ralf-Michael, D-67434 Neustadt (DE); SAUTER, Hubert, D-68167 Mannheim (DE); AMMERMANN, Eberhard, D-64646 Heppenheim (DE); LORENZ, Gisela, D-67434 Neustadt (DE)
(86) Internationale Anmeldenummer: EP9705534
(87) Internationale Veröffentlichungsnummer: WO9817115

(56) Entgegenhaltungen:
- Keine einschlägigen Dokumente gefunden

## Beschreibung

Die vorliegende Erfindung betrifft ein Verfahren zur Bekämpfung von Schadpilzen in Kulturpflanzen mit modifizierter Pathogenresistenz gegen ggf. andere Schadpilze.

Verfahren zur Bekämpfung von Schadpilzen in Kulturpflanzen durch Anwendung fungizid wirksamer Stoffe sind an sich bekannt und in der Literatur beschrieben.

Ebenfalls bekannt sind Kulturpflanzen, deren Pathogenresistenz gegenüber bestimmten Schadpilzen, die besonders nachteilige Auswirkungen auf die jeweilige Kulturpflanze haben, gegenüber dem natürlichen Niveau modifiziert bzw. erhöht ist. Dies kann beispielsweise auf dem Weg der selektiven Züchtung oder aber auf gentechnologischem Wege dadurch erreicht werden, daß man bestimmte DNA-Sequenzen, die bei funktioneller Expression in der Pflanze eine erhöhte Pathogenresistenz bewirken, in die Kulturpflanze einbringt.

Durch die Vielzahl der Schädigungsmechanismen von Schadpilzen kann aber häufig nur gegen eine kleine Gruppe derselben eine Erhöhung der Resistenz erreicht werden. Hinzu kommt, daß derartig modifizerte Pflanzen häufig andere Nachteile aufweisen, z.B. einen geringeren Ernteertrag, eine höhere Anfälligkeit gegen andere Schadpilze etc.

Aufgabe der vorliegenden Erfindung war es daher, ein Verfahren zur Bekämpfung von Schadpilzen zur Verfügung zu stellen, welches insgesamt eine Bekämpfung eines breiten Spektrums von Schadpilzen ermöglicht, ohne daß dabei nachteilige Auswirkungen auf das Ernteertragsverhalten der Pflanzen auftreten sollten.

Diese Aufgabe wird durch das eingangs genannte Verfahren gelöst, wobei man Kulturpflanzen mit modifizierter Pathogenresistenz gegen Schadpilze mit einem Wirkstoff der Formel I (IA oder IB) behandelt.

Wirkstoffe der Formel IA bzw. IB sind an sich bekannt und in der Literatur als Klasse der "Strobilurine", teilweise auch als "ß-Methoxyacrylate" bezeichnet (vgl. H. Sauter et al., "Mitochondrail respiration as a target for antifungals: lessons from research in strobilurins" in "Antifungal agents - Discovery and mode of action", G.K. Dixon, L.G. Copping und D.W. Holloman (Hrsg.), BIOS Scientific Publishers, Oxford 1995, S. 175 ff.)

Insbesondere werden Vertreter der Wirkstoffe der Formel I (bzw. IA und IB) mit fungizider und zum Teil auch bioregulatorischer Wirkung in den folgenden Schriften beschrieben:
EP-A 178 826, EP-A 203 606, EP-A 203 608, EP-A 206 523,
EP-A 212 859, EP-A 226 917, EP-A 226 974, EP-A 242 070,
EP-A 242 081, EP-A 243 012, EP-A 243 014, EP-A 251 082,
EP-A 253 213, EP-A 254 426, EP-A 256 667, EP-A 260 794,
EP-A 260 832, EP-A 267 734, EP-A 273 572, EP-A 274 825,
EP-A 278 595, EP-A 280 185, EP-A 291 196, EP-A 299 694,
EP-A 307 101, EP-A 307 103, EP-A 310 954, EP-A 312 221,
EP-A 312 243, EP-A 329 011, EP-A 331 966, EP-A 335 519,
EP-A 336 211, EP-A 337 211, EP-A 341 845, EP-A 350 691,
EP-A 354 571, EP-A 363 818, EP-A 370 629, EP-A 373 775,
EP-A 374 811, EP-A 378 308, EP-A 378 755, EP-A 379 098,
EP-A 382 375, EP-A 383 117, EP-A 384 211, EP-A 385 224,
EP-A 385 357, EP-A 386 561, EP-A 386 681, EP-A 389 901,
EP-A 391 451, EP-A 393 428, EP-A 393 861, EP-A 398 692,
EP-A 400 417, EP-A 402 246, EP-A 405 782, EP-A 407 873,
EP-A 409 369, EP-A 414 153, EP-A 416 746, EP-A 420 091,
EP-A 422 597, EP-A 426 460, EP-A 429 968, EP-A 430 471,
EP-A 433 233, EP-A 433 899, EP-A 439 785, EP-A 459 285,
EP-A 460 575, EP-A 463 488, EP-A 463 513, EP-A 464 381,
EP-A 468 684, EP-A 468 695, EP-A 468 775, EP-A 471 261,
EP-A 472 224, EP-A 472 300, EP-A 474 042, EP-A 475 158,
EP-A 477 631, EP-A 480 795, EP-A 483 851, EP-A 483 985,
EP-A 487 409, EP-A 493 711, EP-A 498 188, EP-A 498 396,
EP-A 499 823, EP-A 503 436, EP-A 508 901, EP-A 509 857,
EP-A 513 580, EP-A 515 901, EP-A 517 301, EP-A 528 245,
EP-A 532 022, EP-A 532 126, EP-A 532 127, EP-A 535 980,
EP-A 538 097, EP-A 544 587, EP-A 546 387, EP-A 548 650,
EP-A 564 928, EP-A 566 455, EP-A 567 828, EP-A 571 326,
EP-A 579 071, EP-A 579 124, EP-A 579 908, EP-A 581 095,
EP-A 582 902, EP-A 582 925, EP-A 583 806, EP-A 584 625,
EP-A 585 751, EP-A 590 610, EP-A 596 254, WO-A 90/07,493,
WO-A 92/13,830, WO-A 92/18,487, WO-A 92/18,494, WO-A 92/21,653,
WO-A 93/07,116, WO-A 93/08,180, WO-A 93/08,183, WO-A 93/15,046,
WO-A 93/16,986, WO-A 94/00,436, WO-A 94/05,626, WO-A 94/08,948,
WO-A 94/08;968, WO-A 94/10,159, WO-A 94/11,334, JP-A 02/121,970,
JP-A 04/182,461, JP-A 05/201,946, US 5 335 283,
JP-A 05/255,012, JP-A 05/294,948, JP-A 06/025,133,
JP-A 06/025,142, JP-A 06/056,756, FR-A 2 670 781, GB-A 2 210 041,
GB-A 2 218 702, GB-A 2 238 308, GB-A 2 249 092, GB-A 2 253 624,
GB-A 2 255 092, WO-A 90/10006,
WO-A 94/22812, EP-A-627 411,
EP-A 647 631, EP-A 741 698,
EP-A 738 259, EP-A 741 694,
EP-A 673 923.

Für das erfindungsgemaße Verfahren eignen sich grundsätzlich alle in den eingangs genannten Schriften beschriebenen Wirkstoffe der Formeln IA und IB 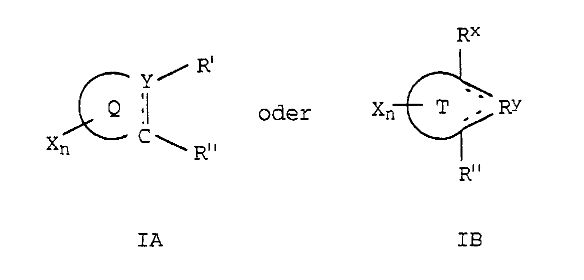 in denen R" für eine der folgenden Gruppen steht:
ggf. subst. Aryloxy, ggf. subst. Hetaryloxy, ggf. subst. Aryloxymethylen, ggf. subst. Hetaryloxymethylen, ggf. subst. Arylethenylen, ggf. subst. Hetarylethenylen, oder eine Gruppe
R^{α}R^{β}C=NOCH₂- oder R^{γ}ON=CR^{δ}CR^{ε}=NOCH₂ wobei die Reste R^{α}, R^{β} , R^{γ}, R^{δ} und R^{ε} im allgemeinen und im besonderen die in den folgenden Schriften beschriebenen Bedeutungen haben:
EP-A 370 629, EP-A 414 153, EP-A 426 460, EP-A 460 575,
EP-A 463 488, EP-A 472 300, EP-A 498 188, EP-A 498 396,
EP-A 515 901, EP-A 585 751, WO-A 90/07,493, WO-A 92/13,830,
WO-A 92/18,487, WO-A 92/18,494, WO-A 93/15,046, WO-A 93/16,986,
WO-A 94/08,948, WO-A 94/08,968, JP-A 05/201,946, JP-A 05/255,012,
JP-A 05/294,948, JP-A 06/025,133, JP-A 06/025,142,
EP-A 738 259, EP-A 741 694, EP-A 738 259 und WO-A 95/21154,
besonders bevorzugte Reste "ggf. subst. Aryloxy, ggf. subst. Hetaryloxy" entsprechen im allgemeinen und im besonderen den in den folgenden Schriften beschriebenen Bedeutungen:
EP-A 178 826, EP-A 242 070, EP-A 242 081, EP-A 253 213,
EP-A 254 426, EP-A 256 667, EP-A 260 794, EP-A 280 185,
EP-A 307 103, EP-A 341 845, EP-A 382 375, EP-A 393 861,
EP-A 398 692, EP-A 405 782, EP-A 430 471, EP-A 468 684,
EP-A 468 695, EP-A 477 631, EP-A 483 985, EP-A 498 188,
EP-A 513 580, EP-A 515 901, WO-A 93/15,046, WO-A 94/10,159,
GB-A 2 253 624 und JP-A 04/182,461;
besonders bevorzugte Reste "ggf. subst. Aryloxymethylen, ggf. subst. Hetaryloxymethylen" entsprechen im allgemeinen und im besonderen den in den folgenden Schriften beschriebenen Bedeutungen:
EP-A 178 826, EP-A 226 917, EP-A 253 213, EP-A 254 426,
EP-A 278 595, EP-A 280 185, EP-A 299 694, EP-A 335 519,
EP-A 350 691, EP-A 363 818, EP-A 373 775, EP-A 378 308,
EP-A 385 224, EP-A 386 561, EP-A 398 692, EP-A 400 417,
EP-A 407 873, EP-A 472 224, EP-A 477 631, EP-A 498 188,
EP-A 498 396, EP-A 513 580, EP-A 515 901, EP-A 579 124,
WO-A 93/08,180, WO-A 93/15,046, WO-A 94/00,436, JP-A 04/182,461,
WO-A 90/10006, EP-A 673 923 und EP-A 758 322.
besonders bevorzugte Reste "ggf. subst. Arylethenylen, ggf. subst. Hetarylethenylen" entsprechen im allgemeinen und im besonderen den in den folgenden Schriften beschriebenen Bedeutungen:
EP-A 178 826, EP-A 203 606, EP-A 253 213, EP-A 254 426,
EP-A 280 185, EP-A 378 755, EP-A 398 692, EP-A 402 246,
EP-A 474 042, EP-A 475 158, EP-A 477 631, EP-A 487 409,
EP-A 498 188, EP-A 498 396, EP-A 513 580, EP-A 515 901,
EP-A 528 245, EP-A 544 587, WO-A 93/15,046, WO-A 94/11,334 und
FR-A 2 670 781 und EP-A 691 332.

Besonders bevorzugte Wirkstoffe der Formel IA, in denen R' für -C[CO₂CH₃]=CHOCH₃ steht, entsprechen im allgemeinen und im besonderen den in den folgenden Schriften beschriebenen Verbindungen:
EP-A 178 826, EP-A 203 606, EP-A 226 917, EP-A 242 070,
EP-A 242 081, EP-A 256 667, EP-A 260 794, EP-A 278 595,
EP-A 299 694, EP-A 307 103, EP-A 335 519, EP-A 341 845,
EP-A 350 691, EP-A 370 629, EP-A 373 775, EP-A 378 308,
EP-A 378 755, EP-A 382 375, EP-A 385 224, EP-A 386 561,
EP-A 393 861, EP-A 402 246, EP-A 405 782, EP-A 407 873,
EP-A 414 153, EP-A 426 460, EP-A 430 471, EP-A 463 488,
EP-A 468 695, EP-A 472 224, EP-A 474 042, EP-A 475 158,
EP-A 483 985, EP-A 487 409, EP-A 515 901, EP-A 528 245,
EP-A 544 587, WO-A 90/07,493, WO-A 92/18,487, WO-A 92/18,494,
WO-A 93/08,180, WO-A 93/16,986, WO-A 94/00,436, WO-A 94/08,948,
WO-A 94/08,968, WO-A 94/10,159, WO-A 94/11,334, FR-A 2 670 781,
JP-A 06/025,133, EP-A 738 259, EP-A 673 923
besonders bevorzugte Wirkstoffe der Formel IA, in denen R' für -C[CO₂CH₃]=NOCH₃ steht, entsprechen im allgemeinen und im besonderen den in den folgenden Schriften beschriebenen Verbindungen:
EP-A 253 213, EP-A 254 426, EP-A 299 694, EP-A 363 818,
EP-A 378 308, EP-A 385 224, EP-A 386 561, EP-A 400 417,
EP-A 407 873, EP-A 460 575, EP-A 463 488, EP-A 468 684,
EP-A 472 300, EP-A 515 901, WO-A 94/00,436, WO-A 94/08,948,
WO-A 94/10,159, WO-A 94/11,334, JP-A 05/201,946, JP-A 05/255,012,
JP-A 05/294,948, EP-A 738 259, EP-A 673 923
besonders bevorzugte Wirkstoffe der Formel IA, in denen R' für -C[CONHCH₃]=NOCH₃ steht, entsprechen im allgemeinen und im besonderen den in den folgenden Schriften beschriebenen Verbindungen:
EP-A 398 692, EP-A 463 488, EP-A 477 631, EP-A 515 901,
EP-A 579 124, EP-A 585 751, WO-A 92/13,830, WO-A 93/08,180,
WO-A 94/08,948, WO-A 94/10,159, WO-A 94/11,334, GB-A 2 253 624,
JP-A 04/182,461, JP-A 05/201,946, JP-A 05/255,012,
JP-A 05/294,948, WO-A 90/10006, EP-A 741 694, EP-A 673 923,
EP-A 691 332 und WO-A 95/21154
besonders bevorzugte Wirkstoffe der Formel IA, in denen R' für -C[CO₂CH₃]=CHCH₃ oder -C[CO₂CH₃]=CHCH₂CH₃ steht, entsprechen im allgemeinen und im besonderen den in den folgenden Schriften beschriebenen Verbindungen:
EP-A 280 185, EP-A 463 488, EP-A 513 580, EP-A 515 901,
EP-A 738 259, EP-A 673 923 und EP-A 758 322
besonders bevorzugte Wirkstoffe der Formel IA, in denen R' für -C[COCH₃]=NOCH₃ oder -C[COCH₂CH₃]=NOCH₃ steht, entsprechen im allgemeinen und im besonderen den in der EP-A 498 188 beschriebenen Verbindungen;
besonders bevorzugte Wirkstoffe der Formel IA, in denen R' für -N(OCH₃)-CO₂CH₃, -N(CH₃)-CO₂CH₃ oder -N(CH₂CH₃)-CO₂CH₃ steht, entsprechen im allgemeinen und im besonderen den in den folgenden Schriften beschriebenen Verbindungen: EP-A 498 396, WO-A 93/15,046, JP-A 06/025,142 und JP-A 06/056,756;

Besonders bevorzugte Wirkstoffe der Formel IB, in denen R für -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃ oder -CH₂C[CONHCH₃]=NOCH₃ steht, entsprechen im allgemeinen und im besonderen den in den folgenden Schriften beschriebenen Verbindungen:
EP-A 212 859, EP-A 331 966, EP-A 383 117, EP-A 384 211,
EP-A 389 901, EP-A 409 369, EP-A 464 381, EP-A 471 261,
EP-A 503 436, EP-A 546 387, EP-A 548 650, EP-A 579 908 und EP-A 584 625.

Beispiele für insbesondere geeignete Wirkstoffe IA und IB sind in den folgenden Tabellen zusammengestellt.

**Tabelle 1.1A**

| | | |
|---|---|---|
| Verbindungen der Formel IA, in denen Q Phenyl bedeutet, R' für -C(CO₂CH₃)=CHOCH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.1A-1 | 2-CH₃-C₆H₄ | EP-A 226 917 |
| I.1A-2 | 2,5-(CH₃)₂-C₆H₃ | EP-A 226 917 |
| I.1A-3 | 2-CH₃, 4-C[CH₃]=NOCH₃-C₆H₃ | EP-A 386 561 |
| I.1A-4 | 2-CH₂CH₂CH₃, 6-CF₃-pyrimidin-4-yl | EP-A 407 873 |

**Tabelle 1.1B**

| | | |
|---|---|---|
| Verbindungen der Formel IA, in denen R' für -C(CO₂CH₃)=CHOCH₃ steht, Q Phenyl bedeutet, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.1B-1 | C₆H₅ | EP-A 178 826 |
| I.1B-2 | 6-[2-CN-C₆H₄-O]-pyrimidin-4-yl | EP-A 382 375 |

**Tabelle 1.1C**

| | | |
|---|---|---|
| Verbindungen der Formel IA, in denen R' für -C(CO₂CH₃)=CHOCH₃ steht, Q Phenyl bedeutet, n den Wert 0 hat, R" für ggf. subst. (Het)aryl-ethenylen steht, wobei die ggf. subst. (Het)arylgruppe die folgende Bedeutung hat | | |

| Nr. | ggf. subst. (Het)aryl | Literatur |
|---|---|---|
| I.1C-1 | 1-(2,4-Cl₂-C₆H₃), 5-CF₃-pyrazol-4-yl | EP-A 528 245 |
| I.1C-2 | 1-(4-Cl-C₆H₄)-pyrazol-4-yl | EP-A 378 755 |
| I.1C-3 | 3-CF₃-C₆H₄ | EP-A 203 606 |
| I.1C-4 | 3-Cl-C₆H₄ | EP-A 203 606 |
| I.1C-5 | 4-C₆H₅-C₆H₄ | EP-A 203 606 |

**Tabelle 1.1D**

| | | | |
|---|---|---|---|
| Verbindungen der Formel IA, in denen Q Phenyl bedeutet, R' für -C(CO₂CH₃)=CHOCH₃ steht, n den Wert 0 hat, R" für CH₂ON=CR^{α}R^{β} steht, wobei R^{α} und R^{β} die folgende Bedeutung haben | | | |

| Nr. | R^{α} | R^{β} | Literatur |
|---|---|---|---|
| I.1D-1 | CH₃ | 4-Cl-C₆H₄ | EP-A 370 629 |
| I.1D-2 | CH₃ | 3-CF₃-C₆H₄ | EP-A 370 629 |
| I.1D-3 | CH₃ | 4-OCH₂CH₃-pyrimidin-2-yl | WO-A 92/18,487 |

**Tabelle 1.1E**

| | | | | |
|---|---|---|---|---|
| Verbindungen der Formel IA, in denen Q Phenyl bedeutet, R' für -C(CO₂CH₃)=CHOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| Nr. | R^{γ} | R^{δ} | R^{ε} | Literatur |
|---|---|---|---|---|
| I.1E-1 | CH₃ | CH₃ | CH₃ | EP-A 738 259 |
| I.1E-2 | CH₃ | CH₃ | CH₂CH₃ | EP-A 738 259 |
| I.1E-3 | CH₃ | C₆H₅ | CH₃ | EP-A 738 259 |
| I.1E-4 | CH₃ | C₆H₅ | CH₂CH₃ | EP-A 738 259 |
| I.1E-5 | CH₃ | 4-Cl-C₆H₄ | CH₃ | EP-A 738 259 |
| I.1E-6 | CH₃ | 4-Cl-C₆H₄ | CH₂CH₃ | EP-A 738 259 |

**Tabelle 1.2A**

| | | |
|---|---|---|
| Verbindungen der Formel IA, in denen Q Phenyl bedeutet, R' für -C(CO₂CH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.2A-1 | 2-CH₃-C₆H₄ | EP-A 253 213 |
| I.2A-2 | 2,5-(CH₃)₂-C₆H₃ | EP-A 400 417 |
| I.2A-3 | 2,4-(CH₃)₂-C₆H₃ | EP-A 400 417 |
| I.2A-4 | 2,3,5-(CH₃)₃-C₆H₂ | EP-A 400 417 |
| I.2A-5 | 2-Cl, 5-CH₃-C₆H₃ | EP-A 400 417 |
| I.2A-6 | 2-CH₃, 4-C[CH₃]=NOCH₃-C₆H₃ | EP-A 386 561 |

**Tabelle 1.2B**

| | | |
|---|---|---|
| Verbindungen der Formel IA, in denen Q Phenyl bedeutet, R' für -C(CO₂CH₃)=NOCH₃ steht, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.2B-1 | C₆H₅ | EP-A 253 213 |
| I.2B-2 | 6-[2-CN-C₆H₄-O]-pyrimidin-4-yl | EP-A 468 684 |

**Tabelle 1.2C**

| | | | |
|---|---|---|---|
| Verbindungen der Formel IA, in denen Q Phenyl bedeutet, R' für -C(CO₂CH₃)=NOCH₃ steht, n den Wert 0 hat, R" für CH₂ON=CR^{α}R^{β} steht, wobei R^{α} und R^{β} die folgende Bedeutung haben | | | |

| Nr. | R^{α} | R^{β} | Literatur |
|---|---|---|---|
| I.2C-1 | CH₃ | 4-Cl-C₆H₄ | EP-A 463 488 |
| I.2C-2 | CH₃ | 3-Cl-C₆H₄ | EP-A 463 488 |
| I.2C-3 | CH₃ | 4-CF₃-C₆H₄ | EP-A 463 488 |
| I.2C-4 | CH₃ | 3-CF₃-C₆H₄ | EP-A 463 488 |
| I.2C-5 | CH₃ | 4-CH₃-C₆H₄ | EP-A 463 488 |
| I.2C-6 | CH₃ | 4-OCH₂CH₃-pyrimidin-2-yl | EP-A 472 300 |
| I.2C-7 | CH₃ | 3,5-Cl₂-C₆H₃ | EP-A 463 488 |

**Tabelle 1.2D**

| | | | | |
|---|---|---|---|---|
| Verbindungen der Formel IA, in denen Q Phenyl bedeutet, R' für -C(CO₂CH₃)=NOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| Nr. | R^{γ} | R^{δ} | R^{ε} | Literatur |
|---|---|---|---|---|
| I.2D-1 | CH₃ | CH₃ | CH₃ | EP-A 738 259 |
| I.2D-2 | CH₃ | CH₃ | CH₂CH₃ | EP-A 738 259 |
| I.2D-3 | CH₃ | C₆H₅ | CH₃ | EP-A 738 259 |
| I.2D-4 | CH₃ | C₆H₅ | CH₂CH₃ | EP-A 738 259 |
| I.2D-5 | CH₃ | 4-Cl-C₆H₄ | CH₃ | EP-A 738 259 |
| I.2D-6 | CH₃ | 4-Cl-C₆H₄ | CH₂CH₃ | EP-A 738 259 |

**Tabelle 1.3A**

| | | |
|---|---|---|
| Verbindungen der Formel IA, in denen Q Phenyl bedeutet, R' für -C(CONHCH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.3A-1 | 2-CH₃-C₆H₄ | EP-A 477 631 |
| I.3A-2 | 2,5-(CH₃)₂-C₆H₃ | EP-A 477 631 |
| I.3A-3 | 2,4-(CH₃)₂-C₆H₃ | EP-A 477 631 |
| I.3A-4 | 2,3,5-(CH₃)₃-C₆H₂ | EP-A 477 631 |
| I.3A-5 | 2-CH₃, 4-C[CH₃]=NOCH₃-C₆H₃ | EP-A 579 124 |
| I.3A-6 | 1-[4-Cl-C₆H₄]-pyrazol-3-yl | WO-A 90/10006 |
| I.3A-7 | 1-[2,4-Cl₂-C₆H₃]-pyrazol-3-yl | WO-A 90/10006 |

**Tabelle 1.3B**

| | | |
|---|---|---|
| Verbindungen der Formel IA, in denen Q Phenyl bedeutet, R' für -C(CONHCH₃)=NOCH₃ steht, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.3B-1 | C₆H₅ | EP-A 398 692 |
| I.3B-2 | 6-[2-CN-C₆H₄-O]-pyrimidin-4-yl | GB-A 2 253 624 |

**Tabelle 1.3C**

| | | |
|---|---|---|
| Verbindungen der Formel IA, in denen Q Phenyl bedeutet, R' für -C(CONHCH₃)=NOCH₃ steht, n den Wert 0 hat, R" für ggf. subst. (Het)aryl-ethenylen steht, wobei die ggf. subst. (Het)arylgruppe die folgende Bedeutung hat | | |

| Nr. | ggf. subst. (Het)aryl | Literatur |
|---|---|---|
| I.3C-1 | 1-[2,4-Cl₂-C₆H₃], 5-CF₃-pyrazol-4-yl | EP-A 691 332 |

**Tabelle 1.3D**

| | | | |
|---|---|---|---|
| Verbindungen der Formel IA, in denen Q Phenyl bedeutet, R' für -C(CONHCH₃)=NOCH₃ steht, n den Wert 0 hat, R" für CH₂ON=CR^{α}R^{β} steht, wobei R^{α} und R^{β} die folgende Bedeutung haben | | | |

| Nr. | R^{α} | R^{β} | Literatur |
|---|---|---|---|
| I.3D-1 | CH₃ | 4-Cl-C₆H₄ | EP-A 463 488 |
| I.3D-2 | CH₃ | 3-Cl-C₆H₄ | EP-A 463 488 |
| I.3D-3 | CH₃ | 4-CF₃-C₆H₄ | EP-A 585 751 |
| I.3D-4 | CH₃ | 3-CF₃-C₆H₄ | EP-A 585 751 |
| I.3D-5 | CH₃ | 4-CH₃-C₆H₄ | EP-A 463 488 |
| I.3D-6 | CH₃ | 3,5-Cl₂-C₆H₃ | EP-A 463 488 |
| I.3D-7 | CH₃ | 2-OCH₂CH₃-pyrimidin-2-yl | WO-A 92/13,830 |

**Tabelle 1.3E**

| | | | | |
|---|---|---|---|---|
| Verbindungen der Formel IA, in denen Q Phenyl bedeutet, R' für -C(CONHCH₃)=NOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| Nr. | R^{γ} | R^{δ} | R^{ε} | Literatur |
|---|---|---|---|---|
| I.3E-1 | CH₃ | CH₃ | CH₃ | WO-A 95/21154 |
| I.3E-2 | CH₃ | CH₃ | CH₂CH₃ | WO-A 95/21154 |
| I.3E-3 | CH₃ | C₆H₅ | CH₃ | WO-A 95/21154 |
| I.3E-4 | CH₃ | C₆H₅ | CH₂CH₃ | WO-A 95/21154 |
| I.3E-5 | CH₃ | 4-Cl-C₆H₄ | CH₃ | WO-A 95/21154 |
| I.3E-6 | CH₃ | 4-Cl-C₆H₄ | CH₂CH₃ | WO-A 95/21154 |

**Tabelle 1.4A**

| | | |
|---|---|---|
| Verbindungen der Formel IA, in denen Q Phenyl bedeutet, R' für - C(CO₂CH₃)=CHCH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.4A-1 | 2-CH₃-C₆H₄ | EP-A 280 185 |
| I.4A-2 | 2,5-(CH₃)₂-C₆H₃ | EP-A 513 580 |
| I.4A-3 | 2,4-(CH₃)₂-C₆H₃ | EP-A 513 580 |
| I.4A-4 | 2,3,5-(CH₃)₃-C₆H₂ | EP-A 513 580 |
| I.4A-5 | 2-Cl, 5-CH₃-C₆H₃ | EP-A 513 580 |
| I.4A-6 | 2-CH₃, 4-C[CH₃]=NOCH₃-C₆H₃ | EP-A 513 580 |
| I.4A-7 | 1-[4-Cl-C₆H₄]-pyrazol-3-yl | EP-A 758 322 |

**Tabelle 1.4B**

| | | |
|---|---|---|
| Verbindungen der Formel IA, in denen Q Phenyl bedeutet, R' für -C(CO₂CH₃)=CHCH₃ steht, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.4B-1 | C₆H₅ | EP-A 513 580 |

**Tabelle 1.4C**

| | | | | |
|---|---|---|---|---|
| Verbindungen der Formel IA, in denen Q Phenyl bedeutet, R' für -C(CO₂CH₃)=CHCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| Nr. | R^{γ} | R^{δ} | R^{ε} | Literatur |
|---|---|---|---|---|
| I.4C-1 | CH₃ | CH₃ | CH₃ | EP-A 738 259 |
| I.4C-2 | CH₃ | CH₃ | CH₂CH₃ | EP-A 738 259 |
| I.4C-3 | CH₃ | C₆H₅ | CH₃ | EP-A 738 259 |
| I.4C-4 | CH₃ | C₆H₅ | CH₂CH₃ | EP-A 738 259 |
| I.4C-5 | CH₃ | 4-Cl-C₆H₄ | CH₃ | EP-A 738 259 |
| I.4C-6 | CH₃ | 4-Cl-C₆H₄ | CH₂CH₃ | EP-A 738 259 |

**Tabelle 1.5A**

| | | |
|---|---|---|
| Verbindungen der Formel IA, in denen Q Phenyl bedeutet, R' für -C(CO₂CH₃)=CHCH₂CH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.5A-1 | 2-CH₃-C₆H₄ | EP-A 513 580 |
| I.5A-2 | 2,5-(CH₃)₂-C₆H₃ | EP-A 513 580 |
| I.5A-3 | 2,4-(CH₃)₂-C₆H₃ | EP-A 513 580 |
| I.5A-4 | 2,3,5-(CH₃)₃-C₆H₂ | EP-A 513 580 |
| I.5A-5 | 2-Cl, 5-CH₃-C₆H₃ | EP-A 513 580 |
| I.5A-6 | 2-CH₃, 4-C[CH₃]=NOCH₃-C₆H₃ | EP-A 513 580 |

**Tabelle 1.5B**

| | | |
|---|---|---|
| Verbindungen der Formel IA, in denen Q Phenyl bedeutet, R' für -C(CO₂CH₃)=CHCH₂CH₃ steht, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.5B-1 | C₆H₅ | EP-A 513 580 |

**Tabelle 1.5C**

| | | | | |
|---|---|---|---|---|
| Verbindungen der Formel IA, in denen Q Phenyl bedeutet, R' für -C(CO₂CH₃)=CHCH₂CH₃ steht, n den Wert 0 hat, R" für -CH₂ON=CR^{γ}CR^{δ}=NOR^{ε} steht, wobei R^{γ}, R^{δ} und R^{ε} die folgende Bedeutung haben | | | | |

| Nr. | R^{γ} | R^{δ} | R^{ε} | Literatur |
|---|---|---|---|---|
| 1.5C-1 | CH₃ | CH₃ | CH₃ | EP-A 738 259 |
| I.5C-2 | CH₃ | CH₃ | CH₂CH₃ | EP-A 738 259 |
| I.5C-3 | CH₃ | C₆H₅ | CH₃ | EP-A 738 259 |
| I.5C-4 | CH₃ | C₆H₅ | CH₂CH₃ | EP-A 738 259 |
| I.5C-5 | CH₃ | 4-Cl-C₆H₄ | CH₃ | EP-A 738 259 |
| I.5C-6 | CH₃ | 4-Cl-C₆H₄ | CH₂CH₃ | EP-A 738 259 |

**Tabelle 1.6A**

| | | |
|---|---|---|
| Verbindungen der Formel IA, in denen Q Phenyl bedeutet, R' für -C(COCH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.6A-1 | 2-CH₃-C₆H₄ | EP-A 498 188 |
| I.6A-2 | 2,5-(CH₃)₂-C₆H₃ | EP-A 498 188 |
| I.6A-3 | 2,4-(CH₃)₂-C₆H₃ | EP-A 498 188 |
| I.6A-4 | 2,3,5-(CH₃)₃-C₆H₂ | EP-A 498 188 |
| I.6A-5 | 2-CH₃, 4-C[CH₃]=NOCH₃-C₆H₃ | EP-A 498 188 |

**Tabelle 1.6B**

| | | |
|---|---|---|
| Verbindungen der Formel IA, in denen Q Phenyl bedeutet, R' für -C(COCH₃)=NOCH₃ steht, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.6B-1 | C₆H₅ | EP-A 498 188 |
| I.6B-2 | 6-[2-CN-C₆H₄-O]-pyrimidin-4-yl | EP-A 498 188 |

**Tabelle 1.7A**

| | | |
|---|---|---|
| Verbindungen der Formel IA, in denen Q Phenyl bedeutet, R' für -C(COCH₂CH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.7A-1 | 2-CH₃-C₆H₄ | EP-A 498 188 |
| I.7A-2 | 2,5-(CH₃)₂-C₆H₃ | EP-A 498 188 |
| I.7A-3 | 2,4-(CH₃)₂-C₆H₃ | EP-A 498 188 |
| I.7A-4 | 2,3,5-(CH₃)₃-C₆H₂ | EP-A 498 188 |
| I.7A-5 | 2-CH₃, 4-C[CH₃]=NOCH₃-C₆H₃ | EP-A 498 188 |

**Tabelle 1.7B**

| | | |
|---|---|---|
| Verbindungen der Formel IA, in denen Q Phenyl bedeutet, R' für -C(COCH₂CH₃)=NOCH₃ steht, n den Wert 0 hat, R" für ggf. subst. (Het)aryl-oxy steht, wobei die ggf. subst. (Het)arylgruppe die folgende Bedeutung hat | | |

| Nr. | ggf. subst. (Het)aryl | Literatur |
|---|---|---|
| I.7B-1 | C₆H₅ | EP-A 498 188 |
| I.7B-2 | 6-[2-CN-C₆H₄-O]-pyrimidin-4-yl | EP-A 498 188 |

**Tabelle 1.8A**

| | | |
|---|---|---|
| Verbindungen der Formel IA, in denen Q Phenyl bedeutet, R' für -N(OCH₃)-CO₂CH₃ steht, n den Wert 0 hat, R" für ggf. subst. (Het)aryl-oxymethylen steht, wobei die ggf. subst. (Het)arylgruppe die folgende Bedeutung hat | | |

| Nr. | ggf. subst. (Het)aryl | Literatur |
|---|---|---|
| I.8A-1 | 2-CH₃-C₆H₄ | WO-A 93/15,046 |
| I.8A-2 | 2,5-(CH₃)₂-C₆H₃ | WO-A 93/15,046 |
| I.8A-3 | 2,4-(CH₃)₂-C₆H₃ | WO-A 93/15,046 |
| I.8A-4 | 2,3,5-(CH₃)₃-C₆H₂ | WO-A 93/15,046 |
| I.8A-5 | 2-Cl, 5-CH₃-C₆H₃ | WO-A 93/15,046 |
| I.8A-6 | 2-CH₃, 4-C[CH₃]=NOCH₃-C₆H₃ | WO-A 93/15,046 |
| I.8A-7 | 2-CH₃, 4-C[CH₃]=NOCH₂CH₃-C₆H₃ | WO-A 93/15,046 |
| I.8A-8 | 2-CH₃, 4-C[CH₂CH₃]=NOCH₃-C₆H₃ | WO-A 93/15,046 |
| I.8A-9 | 2-CH₃, 4-C[CH₂CH₃]=NOCH₂CH₃-C₆H₃ | WO-A 93/15,046 |
| I.8A-10 | 1-[4-Cl-C₆H₄]-pyrazol-3-yl | WO-A 96/01256 |

**Tabelle 1.8B**

| | | | |
|---|---|---|---|
| Verbindungen der Formel IA, in denen Q Phenyl bedeutet, R' für -N(OCH₃)-CO₂CH₃ steht, n den Wert 0 hat, R" für CH₂ON=CR^{α}R^{β} steht, wobei R^{α} und R^{β} die folgende Bedeutung haben | | | |

| Nr. | R^{α} | R^{β} | Literatur |
|---|---|---|---|
| I.8B-1 | CH₃ | 3,5-Cl₂-C₆H₃ | WO-A 93/15,046 |

Es ist davon auszugehen, daß das erfindungsgemäße Verfahren grundsätzlich bei allen Kulturpflanzen und gärtnerischen Nutzpflanzen mit einer modifizierten Pathogenresistenz gegen Schadpilze angewendet werden kann. Beispiele für derartige Pflanzen sind Bananen, Kaffee, Kartoffeln, Raps, Rüben, Spargel, Tee, Tomaten, Zwiebelgewächse, und Gramineen wie Gerste, Hafer, Mais, Reis, Roggen und Weizen; besonders ausgeprägt ist der Effekt bei Kartoffeln, Rüben, Spargel, Zwiebelgewächsen und Gramineen und insbesondere empfiehlt sich das erfindungsgemäße Verfahren bei Gramineen, z.B. Weizen, Gerste und Reis. Verfahren zur Erhöhung der Pathogenresistenz solcher Kulturpflanzen sind an sich dem Fachmann bekannt und in der Literatur beschrieben. Beispielhaft sei hier auf die WO-A 95/05467, die WO-A 94/8009 und die Veröffentlichungen J. Lamb et al., Biotechnology 10, 1436-1445 (1992), H. Anzai et al., Mol. Gen. Genet. 219, 492-494 (1989), R. Grison et al., Nature Biotechnology 14, 643-646 (1996), H, Uchimiya et al., Biotechnology 11, 835-837 (1993), G. Jach et al., Biopractice 1, 33-40 (1992), J. Logemann et al, Biotechnology 10, 305-308 (1992) und G. Strittmatter et al., Biotechnology 13, 1085-1089 (1995) hingewiesen.

Die Aufwandmengen an Verbindungen IA bzw. IB liegen je nach der Art der Kulturpflanze bei 0,5 bis 0,01 kg/ha, vorzugsweise 0,3 bis 0,01 kg/ha, insbesondere 0,15 bis 0,05 kg/ha.

Für das erfindungsgemäße Verfahren können die Verbindungen I in der für die Anwendung im Pflanzenschutz üblichen Art und Weise aufbereitet und angewendet werden (vgl. eingangs zitierte Literatur).

Das erfindungsgemäße Verfahren hat unter anderem den Vorteil, daß eine Vielzahl von Schadpilzen mit nur einem Wirkstoff der Formel I erfolgreich bekämpft werden kann, wofür im Stand der Technik mehrere fungizid wirksame Verbindungen erforderlich waren, die sich unter Umständen gegenseitig nachteilig beeinflußten.

In einigen Fällen konnten die Aufwandmengen für die Wirkstoffe der Formel I gegenüber den üblichen Aufwandmengen deutlich reduziert werden, ohne daß die Wirkung beeinträchtigt wurde. Dieses Ergebnis ist überraschend. Beispielsweise sind im Fall von Kresoxim-methyl (Methyl-methoxyimino-α-(o-tolyloxy)-o-tolylacetat) Aufwandmengen von unter 0,05 kg/ha, insbesondere 0,04 bis 0,01 kg/ha, ausreichend.

Besonders vorteilhaft läßt sich das erfindungsgemäße Verfahren in Kulturpflanzen einsetzen, die eine erhöhte Pathogenresistenz gegen solche Schadpilze aufweisen, die mit den einzelnen Wirkstoffen der Formel I in der Regel nicht vollständig zu bekämpfen sind. So kann die normalerweise unzureichende Wirkung von Azoxystrobin (Methyl-(E)-2-(2-[6-(2-cyanophenoxy)pyrimidin-4-yloxy]phenyl) -3-methoxyacrylat) gegen Getreidemehltau in mehltauresistenten Gerste- oder Weizensorten überproportional verbessert werden.

Auch in Kulturpflanzen mit erhöhter Pathogenresistenz gegen solche Schadpilze, die auch mit Wirkstoffen der Formel I gut zu bekämpfen sind, kann das erfindungsgemäße Verfahren mit Erfolg eingesetzt werden. Hier kann häufig die erforderliche Aufwandmenge erheblich reduziert werden.

Beispielsweise benötigt man weniger Wirkstoff Kresoxim-methyl, um solche Sorten von Kulturpflanzen wie Weizen, Gerste, Reben oder Apfelbäume, die gegen echte Mehltau-Arten erhöht resistent sind, völlig befallsfrei zu bekommen - verglichen mit den höheren Aufwandmengen an Strobilurin-Wirkstoff, die erforderlich sind, um nicht resistente Pflanzen Mehltau-frei zu bekommen. Vergleichsversuch zeigt deutlich, daß bei den erhöht Mehltau-resistenten Gerstensorten A HOR 1528/9, A HOR 2978/80, A HOR 3141/78 und A HOR 5458/70 mit erheblich geringeren Mengen an Kresoxim-Methyl die gleiche Kontrolle des Gerstenmehltaus möglich ist als bei den üblichen im Handel erhältlichen, nicht erhöht Mehltau-resistenten Sorten "Asse" und "Sonja".

Das gleiche gilt für resistente bzw. nicht resistente Reben und deren Behandlung mit Kresoxim-methyl zur Bekämpfung von Plasmopara viticola.

Entsprechendes gilt auch für den Wirkstoff Azoxystrobin zur Kontrolle einer Vielzahl von verschiedenen pflanzenpathogenen Pilzen in resistenten bzw. nicht resistenten Kulturpflanzen. Beispiele für ökonomisch wichtige pflanzenpathogene Pilze sind aus der Klasse der Basidiomyceten folgende Pathogen/Wirtspaare:
Puccinia-Arten an Getreide und Rasen, Rhizoctonia-Arten an Baumwolle, Reis und Rasen, Hemileia vastatrix an Kaffee, Ustilago-Arten in Getreide und Zuckerrohr; aus der Gruppe der Ascomyceten Erysiphe-Arten in Weizen, Gerste und Roggen, Erysiphe- und Sphaerotheca-Arten in Kürbisgewächsen, Podosphaera leucotricha an Äpfeln, Uncinula necator in Reben, Venturia-Arten an Äpfeln und
Birnen; aus der Klasse der Deuteromyceten Botrytis cinerea an Erdbeeren, Reben, Gemüse und Zierpflanzen, Alternaria-Arten in Gemüse und Obst, Pyricularia oryzae an Reis und Rasen, Cercospora arachidicola in Erdnüssen, Pseudocercosporella herpotichoides an Weizen und Gerste, Helminthosporium-Arten in Getreide, Septoria-Arten in Getreide und Gemüse; und aus der Klasse der Phycomyceten Phytophthora infestans an Tomaten und Kartoffeln, Plasmopara viticola an Reben und Pseudoperonospora-Arten in Hopfen und Gemüse.

### Vergleichsversuch

### Wirksamkeit gegen Gerstenmehltau (Erysiphe graminis f. sp. hordei)

Blätter von in Töpfen gewachsenen Gerstenkeimlingen der verschiedenen Sorten wurden mit wäßriger Wirkstoffaufbereitung, die aus einer Stammlösung bestehend aus 10 % Wirkstoff (Kresoxim-methyl), 63 % Cyclohexanon und 27 % Emulgiermittel angesetzt wurde, bis zur Tropfnäße besprüht und am folgenden Tage mit Sporen des Gerstenmehltaus (*Erysiphe graminis* f. sp. *hordei*) bestäubt. Die Versuchspflanzen wurden anschließend im Gewächshaus bei Temperaturen zwischen 20° und 22° C und 75 bis 80 % relativer Luftfeuchtigkeit aufgestellt. 6 Tage nach der Inokulation wurde das Ausmaß der Mehltau-entwicklung visuell in % Befall der gesamten behandelten Blattfläche ermittelt.

| Gersten-Sorte %-Befall der Blätter nach Applikation von wäßriger Kresoxim-Methyl-Aufbereitung, KresoximMethyl-Gehalt in ppm | | | | | |
|---|---|---|---|---|---|
| | 2 ppm | 1 ppm | 0.5 ppm | 0.25 ppm | Unbehandelt |
| "Asse" aus dem Handel käufliche Sorte | 7 | 80 | 100 | 100 | 100 |
| "Sonja" aus dem Handel käufliche Sorte | 5 | 70 | 100 | 100 | 100 |

erhöht Mehltau-resistente Sorten

| | | | | | |
|---|---|---|---|---|---|
| A HOR 1528/91 | 0 | 7 | 30 | 90 | 100 |
| A HOR 2978/80 | 2 | 15 | 40 | 90 | 100 |
| A HOR 3141/78 | 1 | 10 | 70 | 100 | 100 |
| A HOR 5458/70 | 0 | 2 | 40 | 90 | 100 |

Die Gerstenkeimlinge (*Hordeum vulgaris*) der im Vergleichsversuch verwendeten Sorten sind erhältlich unter folgender Anschrift: Institut für Pflanzengenetik und Kulturpflanzenforschung Gatersleben, Genbank, Corrensstr. 3, 06466 Gatersleben, Deutschland.

## Patentansprüche

1. Verfahren zur Bekämpfung von Schadpilzen in Kulturpflanzen mit modifizierter Pathogenresistenz gegen Schadpilze, dadurch gekennzeichnet, daß man die Pflanzen mit einem Wirkstoff der Formel Ia oder IB 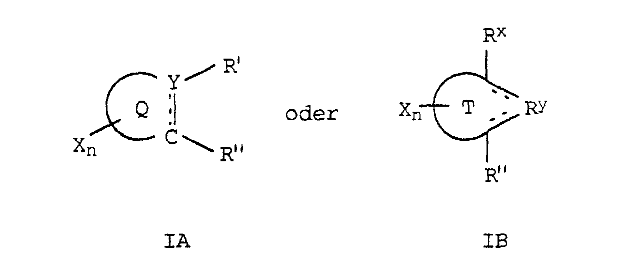 behandelt, in denen ···· für Einfach- oder Doppelbindung steht und der Index und die Substituenten die folgende Bedeutung haben:
R' -C[CO₂CH₃]=CHOCH₃, -C [CO₂CH₃] =NOCH₃, -C [CONHCH₃] =NOCH₃,
-C[CO₂CH₃]=CHCH₃, -C[CO₂CH₃]=CHCH₂CH₃, -C[COCH₃]=NOCH₃,
-C[COCH₂CH₃]=NOCH₃, -N(OCH₃)-CO₂CH₃, -N(CH₃)-CO₂CH₃,
-N(CH₂CH₃)-CO₂CH₃,
R" ein C-organischer Rest,
ein C-organischer Rest, welcher direkt oder über eine Oxy-, Mercapto-, Amino-, oder Alkylaminogruppe gebunden ist, oder
zusammen mit einer Gruppe X und dem Ring Q bzw. T, an den sie gebunden sind, ein ggf. substituiertes bicyclisches, partiell oder vollständig ungesättigtes System, welches neben Kohlenstoffringgliedern Heteroatome aus der Gruppe Sauerstoff, Schwefel und Stickstoff enthalten kann,
R^{x} -OC[CO₂CH₃]=CHOCH₃, -OC[CO₂CH₃]=CHCH₃,
-OC[CO₂CH₃]=CHCH₂CH₃, -SC[CO₂CH₃]=CHOCH₃,
-SC[CO₂CH₃] =CHCH₃, -SC[CO₂CH₃]=CHCH₂CH₃,
-N(CH₃)C[CO₂CH₃]=CHOCH₃, -N(CH₃)C[CO₂CH₃]=NOCH₃,
-CH₂C[CO₂CH₃]=CHOCH₃, -CH₂C[CO₂CH₃] =NOCH₃,
-CH₂C[CONHCH₃] =NOCH₃,
R^{y} Sauerstoff, Schwefel, =CH- oder =N-,
n 0, 1, 2 oder 3, wobei die Reste X verschieden sein können, wenn n > 1 ist;
X Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio oder für den Fall, daß n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe, wobei diese Ketten ihrerseits ein bis drei der folgenden Reste tragen können: Halogen, C₁-C₄-Alkyl, C₁-C₄-Halogenalkyl, C₁-C₄-Alkoxy, C₁-C₄-Halogenalkoxy oder C₁-C₄-Alkylthio,
Y =C- oder -N-,
Q Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl und Triazinyl,
T Phenyl, Oxazolyl, Thiazolyl, Thiadiazolyl, Oxadiazolyl, Pyridinyl, Pyrimidinyl und Triazinyl.

2. Verfahren nach Anspruch 1, dadurch gekennzeichnet, daß man die Kulturpflanzen mit 0,5 bis 0,01 kg/ha einer Verbindung der Formel IA oder IB behandelt.

3. Verwendung von Wirkstoffen der Formel IA oder IB gemäß Anspruch 1 zur Bekämpfung von Schadpilzen in Kulturpflanzen mit modifizierter Pathogenresistenz gegen bestimmte Schadpilze.

## Claims

1. A method for controlling harmful fungi in crop plants having modified pathogen resistance to harmful fungi, which comprises treating the plants with an active compound of formula IA or IB 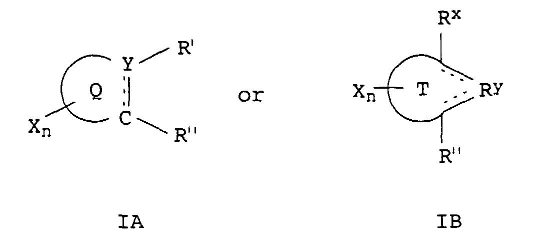 where ···· is a single or double bond and where:
R' is -C[CO₂CH₃]=CHOCH₃, -C[CO₂CH₃]=NOCH₃, -C[CONHCH₃]=NOCH₃,
-C[CO₂CH₃]=CHCH₃, -C[CO₂CH₃]=CHCH₂CH₃, -C[COCH₃]=NOCH₃,
-C[COCH₂CH₃]=NOCH₃, -N(OCH₃)-CO₂CH₃, -N(CH₃)-CO₂CH₃,
-N(CH₂CH₃)-CO₂CH₃,
R" is a C-organic radical,
a C-organic radical which is attached directly or via an oxy, mercapto, amino or alkylamino group, or
together with a group X and the ring Q or T to which they are attached forms a bicyclic, partially or fully unsaturated system with or without substitution which may, in addition to carbon ring members, contain hetero atoms from the group consisting of oxygen, sulfur and nitrogen,
R^{x} is -OC[CO₂CH₃]=CHOCH₃, -OC[CO₂CH₃]=CHCH₃,
-OC[CO₂CH₃]=CHCH₂CH₃, -SC[CO₂CH₃]=CHOCH₃,
-SC[CO₂CH₃]=CHCH₃, -SC[CO₂CH₃]=CHCH₂CH₃,
-N(CH₃)C[CO₂CH₃]=CHOCH₃, -N(CH₃)C[CO₂CH₃]=NOCH₃,
-CH₂C[CO₂CH₃]=CHOCH₃, -CH₂C[CO₂CH₃]=NOCH₃,
-CH₂C[CONHCH₃]=NOCH₃,
R^{y} is oxygen, sulfur, =CH- or =N-,
n is 0, 1, 2 or 3, where the radicals X may be different if n > 1;
X is cyano, nitro, halogen, C₁-C₄-alkyl, C₁-C₄-haloalkyl, C₁-C₄-alkoxy, C₁-C₄-haloalkoxy, C₁-C₄-alkylthio or, if n > 1, a C₃-C₅-alkylene, C₃-C₅-alkenylene, oxy-C₂-C₄-alkylene, oxy-C₁-C₃-alkylenoxy, oxy-C₂-C₄-alkenylene, oxy-C₂-C₄-alkenylenoxy or butadienediyl group which is attached to two adjacent carbon atoms of the phenyl ring, where these chains in turn may carry one to three of the following radicals: halogen, C₁-C₄-alkyl, C₁-C₄-haloalkyl, C₁-C₄-alkoxy, C₁-C₄-haloalkoxy or C₁-C₄-alkylthio,
Y is =C- or -N-,
Q is phenyl, pyrrolyl, thienyl, furyl, pyrazolyl, imidazolyl, oxazolyl, isoxazolyl, thiazolyl, thiadiazolyl, triazolyl, pyridinyl, 2-pyridonyl, pyrimidinyl and triazinyl,
T is phenyl, oxazolyl, thiazolyl, thiadiazolyl, oxadiazolyl, pyridinyl, pyrimidinyl and triazinyl.

2. A method as claimed in claim 1, wherein the crop plants are treated with from 0.5 to 0.01 kg/ha of a compound of the formula IA or IB.

3. The use of compounds of the formula IA or IB as claimed in claim 1 for controlling harmful fungi in crop plants having modified pathogen resistance to certain harmful fungi.

## Revendications

1. Procédé pour combattre les mycètes nuisibles dans des cultures de végétaux dont la résistance pathogène aux mycètes nuisibles a été modifiée, caractérisé par le fait que l'on traite les végétaux par une substance active de formule IA ou IB 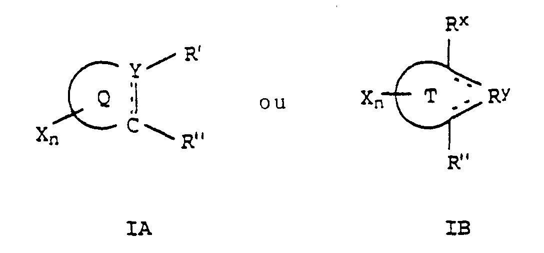 dans lesquelles .... représente une liaison simple ou double et l'indice et les symboles ont les significations suivantes :
R' représente - C[CO₂CH₃]=CHOCH₃, -C[CO₂CH₃]=NOCH₃, -C[CONHCH₃]=NOCH₃,
-C[CO₂CH₃]=CHCH₃, -C[CO₂CH₃]=CHCH₂CH₃, -C[COCH₃]=NOCH₃,
-C[COCH₂CH₃]=NOCH₃, -N (OCH₃)-CO₂CH₃, -N (CH₃)-CO₂CH₃,
-N(CH₂CH₃)-CO₂CH₃,
R" représente un radical organique carboné,
un radical organique carboné relié directement ou par l'intermédiaire d'un pont oxy, mercapto, amino ou alkylamino, ou bien
R" forme un groupe X et le cycle Q ou T auquel ils sont reliés un système bicyclique partiellement ou totalement insaturé et éventuellement substitué et qui, en plus des chaînons carbonés, peut contenir des hétéroatomes choisis parmi l'oxygène, le soufre et l'azote,
R^{x} représente -OC [CO₂CH₃] =CHOCH₃, -OC[CO₂CH₃]=CHCH₃,
-OC[CO₂CH₃]=CHCH₂CH₃, -SC[CO₂CH₃]=CHOCH₃,
-SC[CO₂CH₃]=CHCH₃, -SC[CO₂CH₃]=CHCH₂CH₃,
-N(CH₃)C[CO₂CH₃]=CHOCH₃, -N(CH₃)C[CO₂CH₃]=NOCH₃,
-CH₂C[CO₂CH₃]=CHOCH₃, -CH₂C[CO₂CH₃]=NOCH₃,
-CH₂C[CONHCH₃]=NOCH₃,
R^{y} représente l'oxygène, le soufre, =CH- ou =N-,
n est égal à 0, 1, 2 ou 3, et les substituants X peuvent être différents lorsque n est supérieur à 1 ;
X représente un groupe cyano, nitro, un halogène, un groupe alkyle en C1-C4, halogénoalkyle en C1-C4, alcoxy en C1-C4, halogénoalcoxy en C1-C4, alkylthio en C1-C4 ou bien, lorsque n est supérieur à 1, un groupe alkylène en C3-C5, alcénylène en C3-C5, oxyalkylène en C2-C4, oxy(alkylène en C1-C3)oxy, oxyalcénylène en C2-C4, oxy-(alcénylène en C2-C4)oxy ou butadiènediyle relié à deux atomes de carbone voisins du cycle phényle, ces chaînes pouvant elles-mêmes porter un à trois des substituants suivants : halogéno, alkyle en C1-C4, halogénoalkyle en C1-C4, alcoxy en C1-C4, halogénoalcoxy en C1-C4 ou alkylthio en C1-C4,
Y représente =C- ou -N-,
Q représente un groupe phényle, pyrrolyle, thiényle, furyle, pyrazolyle, imidazolyle, oxazolyle, isoxazolyle, thiazolyle, thiadiazolyle, triazolyle, pyridinyle, 2-pyridonyle, pyrimidinyle ou triazinyle,
T représente un groupe phényle, oxazolyle, thiazolyle, thiadiazolyle, oxadiazolyle, pyridinyle, pyrimidinyle ou triazinyle.

2. Procédé selon la revendication 1, caractérisé par le fait que l'on traite les végétaux cultivés par 0,5 à 0,01 kg/ha d'un composé de formule IA ou IB.

3. Utilisation des substances actives de formule IA ou IB selon la revendication 1 pour combattre les mycètes nuisibles dans des cultures de végétaux dont la résistance pathogène à certains mycètes nuisibles a été modifiée.
